# FASCICULE DE BREVET EUROPEEN

(11) **EP 1 638 386 B1**
(45) Date de publication et mention de la délivrance du brevet: **22.11.2006**
(21) Numéro de dépôt: 04705032.3
(22) Date de dépôt: 26.01.2004
(51) Int. Cl.: A01D 31/00, B65G 69/16

(54) **DISPOSITIF D'ENTREPOSAGE POUR LEGUMES, EN PARTICULIER POIREAUX, ET PROCEDE A CET EFFET**
AUFBEWAHRUNGSVORRICHTUNG FÜR GEMÜSE, INSBESONDERE LAUCH, UND VERFAHREN HIERFÜR
STORAGE DEVICE FOR VEGETABLES, IN PARTICULAR LEEKS, AND METHOD THEREFOR

(30) Priorité: 24.01.2003 BE 200300054
(43) Date de publication de la demande: 29.03.2006
(73) Titulaire: Verhoest, Marc, 8800 Rumbeke (BE)
(72) Inventeur: Verhoest, Marc, 8800 Rumbeke (BE)
(74) Mandataire: Petsis, Christos
(86) Numéro de dépôt international: PCT/BE2004/000014
(87) Numéro de publication internationale: WO 2004/064490

(56) Documents cités:
- EP-A- 0 464 944
- NL-A- 9 300 405
- SU-A- 600 034
- US-A- 3 881 611
- US-A- 4 501 350
- US-A- 5 598 771

## Description

### Domaine de l'invention

La présente invention se rapporte à un dispositif d'entreposage de légumes arrachés, en particulier les poireaux tel que décrit dans le document EP-A-0464944.

### Arrière-plan de l'invention

Actuellement les légumes arrachés, en particulier les poireaux, sont ramassés par des travailleurs affectés à cette tâche, qui mettent les légumes ramassés dans des conteneurs prévus à cet effet. Cela représente une besogne qui engendre une grande contrainte pour le ramasseur, en particulier pour le dos. C'est pourquoi un ramassage répété ou de longue durée peut provoquer à terme de fortes douleurs au dos.

De plus, le rythme du processus d'entreposage est déterminé en fin de compte par la vitesse de ramassage de ces derniers. Ainsi, vu globalement, le rythme du processus automatisé en grande partie et mettant en oeuvre un dispositif d'arrachage à une vitesse de travail du niveau d'une machine ordinaire est ralenti considérablement par une intervention manuelle à l'arrachage à la fin du processus d'arrachage-entreposage.

### Exposé de l'invention

La présente invention vise à apporter une solution aux problèmes énoncés ci-dessus. A cet effet, il est proposé selon cette invention un dispositif spécifique consistant en un dispositif d'entreposage pour les légumes arrachés, en particulier des poireaux,comme défini dans la revendication 1. Grâce aux mesures qui y sont définies, l'intervention humaine pour le ramassage est éliminée et le processus précité peut se dérouler de façon entièrement automatique. Cela a comme avantage significatif que le rythme peut être considérablement augmenté et que la productivité du processus d'arrachage et d'entreposage peut être nettement améliorée grâce au dispositif suivant l'invention.

Suivant un mode de réalisation avantageux du dispositif d'entreposage suivant l'invention, un moyen de chargement pivotant, en particulier du type fourche, est prévu, lequel est agencé de façon articulée à un châssis, ou de préférence encore à un cadre intermédiaire. Ladite fourche est destinée à porter un conteneur à légumes à remplir.

Suivant un autre mode de réalisation avantageux du dispositif suivant l'invention, ledit châssis supporte une bande transporteuse, le cas échéant double, dont l'inférieure est coulissante en dedans et en dehors jusqu'au-dessus dudit conteneur ou boîte à poireaux.

Cette invention a aussi pour objet un procédé tel que défini dans les revendications de procédé annexées 13 à 19.

De manière avantageuse, ledit châssis est déplaçable dans un champ avec le dispositif d'arrachage proprement dit.

Grâce à un placement adéquat de ladite bande transporteuse, le cas échéant inférieure, un conteneur à poireaux vide peut être rempli progressivement couche par couche avec les légumes arrachés, en particulier les poireaux, ceux-ci arrivant dans ledit conteneur à partir d'une distance limitée. Cela présente comme avantage que les légumes ne sont pas endommagés pendant cette opération d'entreposage. Surtout pour le poireau se caractérisant par une structure plutôt délicate, cet aspect du procédé suivant l'invention est particulièrement avantageux, étant donné que le poireau peut être facilement endommagé dans des circonstances de travail normales.

Un avantage essentiel ici est que ledit dispositif d'entreposage peut être utilisé avec tous types de dispositif d'arrachage, aussi bien les classiques que ceux sur chenilles ou les autotractées, par exemple tel que celui décrit dans le document BE 2002/0508.

Ainsi, étant donné que jusqu'à ce jour les poireaux arrachés sont ramassés du sol par une personne spécialement affectée à cette tâche, un tel système de ramassage automatique apporte, outre les avantages déjà cités, encore l'avantage supplémentaire que des volumes plus importants de poireaux arrachés peuvent être traités et entreposés dans le même laps de temps, de sorte que le dispositif d'entreposage selon l'invention améliore d'une manière considérable le rendement d'entreposage par rapport aux moyens d'entreposage manuels existants.

En particulier les coûts d'entreposage sont nettement plus faibles tandis que les interventions humaines pour le ramassages ne sont plus requises, les coûts de main d'oeuvre y afférents pouvant ainsi être supprimés.

D'autres caractéristiques et particularités du dispositif, respectivement du procédé suivant l'invention sont définies dans les autres sous-revendications annexées.

D'autres avantages et détails du dispositif et du procédé suivant l'invention sont exposés en détail dans la description ci-après de quelques modes de réalisation exemplaires préférés lesquels sont présentés à la lumière des dessins annexés.

### Brève description des dessins

La figure 1 est une vue arrière schématique du dispositif d'entreposage suivant l'invention en position de travail écartée.

La figure 2 est une représentation d'un dispositif suivant l'invention analogue suivant une vue du dessus.

### Description

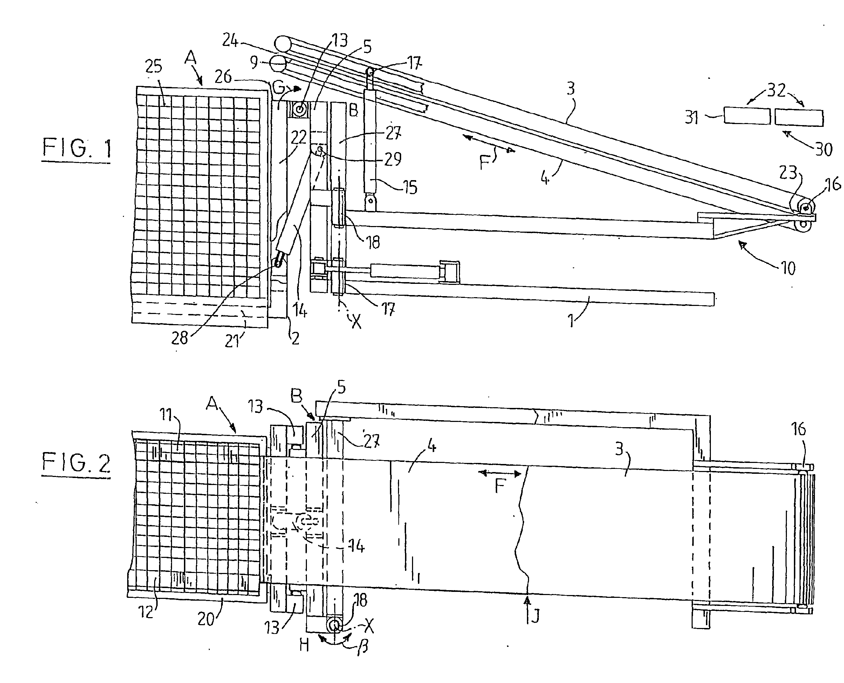

Sur la figure 1 est représenté un dispositif d'entreposage 10 qui d'une manière générale est destiné à l'entreposage de légumes arrachés. L'exemple de réalisation décrit plus en détail ci-après est cependant axé sur le cas particulier des poireaux de façon non limitative. Les légumes à entreposer proviennent d'un dispositif d'arrachage lequel est représenté schématiquement par 30.

Un tel dispositif d'entreposage comprend un châssis mobile 1 au-dessus duquel est agencée au moins une bande transporteuse 3, 4. Un dispositif de chargement 2 est fixé audit châssis sur lequel un conteneur 20 peut être agencé pour y entreposer temporairement les poireaux arrachés.

Le dispositif de chargement 2 est fixé de façon articulée 13 au châssis, de préférence par un cadre intermédiaire 5, qui est également fixé de façon articulée au châssis.

La liaison articulée 13 permet un pivotement du dispositif de chargement 2 suivant la flèche G entre une position intermédiaire A à proximité du sol et une position pivotée sur un angle déterminé α qui est tel que le côté sortie 24 de la bande transporteuse 3 se trouve à hauteur de l'intérieur 25 du conteneur à remplir 20 qui est agencé sur le dispositif de chargement.

Le cas échéant, deux bandes transporteuses 3, 4 sont prévues qui sont disposées de façon mutuellement parallèle à proximité immédiate l'une de l'autre. La double bande transporteuse 3, 4 est disposée suivant la direction de la largeur du châssis, c'est-à-dire transversalement à la direction de déplacement de celui-ci montré par la flèche J.

De préférence la bande transport inférieure 4 est agencée à coulissement intérieur et extérieur selon la flèche F au moyen de rouleaux de guidage non représentés et d'un cylindre coulissant.

La figure 1 montre la position B à coulissement intérieur de la bande transporteuse inférieure 4. La position de coulissement de la bande transporteuse inférieure non représentée est telle que le côté sortie de celle-ci se trouve à hauteur de la partie à remplir du conteneur.

Avantageusement la double bande transporteuse est prévue en pente, de façon à ce que son côté entrée 23 soit disposé sous le côté sortie 31 de la bande de serrage 32 provenant du dispositif d'arrachage 30 pour l'amenée des légumes arrachés, d'une part, et que le côté sortie 24 de la bande transporteuse peut être amenée jusqu'à l'intérieur 25 dudit conteneur 20, d'autre part.

D'une manière plus avantageuse encore, un élément de réglage 14 est prévu lequel règle l'angle de rotation instantané α de l'élément de chargement 2 en fonction du poids instantané du conteneur 20 pendant le processus de remplissage.

Ledit élément de réglage 14 est formé de préférence par un cylindre, qui à ses deux extrémités, est fixé de façon articulée en 28, 29 au bras relevé 22 du dispositif de chargement, d'une part, et au châssis 1, respectivement au cadre intermédiaire 5, d'autre part.

Da manière avantageuse, l'élément de réglage 14 est commandé au départ d'une cabine par le conducteur du dispositif d'entreposage.

La bande transporteuse 3, 4 est rattachée de façon articulée en 16 au châssis à son côté entrée 13 et peut être amenée à pivoter autour de 16 au moyen d'un élément de levage 15 prévu à cet effet, par exemple un cylindre agencé de façon articulée en 17 au côté sortie 24 de la bande transporteuse 3, 4.

De préférence, un cadre intermédiaire 5 est prévu qui est fixé de façon articulée au rebord 27 du châssis 1 par l'intermédiaire d'un ensemble d'articulations 17, 18. A son côté supérieur ledit châssis intermédiaire 5 est fixé de façon articulée 13 audit dispositif de chargement 2 au côté supérieur 26 de celui-ci. Grâce à la liaison articulée 17, 18 du cadre intermédiaire 5 sur le châssis 1, le dispositif de chargement 2 peut être amené à pivoter sur un angle allant jusqu'à 180° entre une position de repos non représentée qui est alignée avec le châssis lui-même, d'une part, et une position de travail écartée A comme représenté sur la figure 2, d'autre part. Dans la position de repos non écartée du dispositif de chargement, ce dernier se trouve à l'arrière du châssis 1, ce qui est la position adéquate pour être transporté entre le garage et le site d'exploitation du dispositif respectivement, par exemple sur la voie publique.

De préférence le dispositif de chargement 2 comprend une fourche à deux dents profilée en L, dans lequel un bras 21 s'étend de manière sensiblement parallèle au sol dans la position intermédiaire A non tournée du dispositif de chargement 2 et a une fonction portante pour le conteneur. L'autre bras 22 du dispositif de chargement a une fonction d'appui pour le conteneur, d'une part, et une fonction de liaison avec la partie restante du dispositif d'entreposage, d'autre part.

De préférence le cylindre régulateur articulé 14 est disposé de manière centrale entre les deux profils en L 11, 12 du dispositif de chargement.

Le dispositif décrit ci-dessus peut fonctionner efficacement avec une seule bande transporteuse.

Le fonctionnement du dispositif d'entreposage est décrit plus en détail ci-après.

D'abord le dispositif d'entreposage 10 est positionné de façon appropriée par rapport au dispositif d'arrachage 30.

Pendant le déplacement du dispositif d'entreposage 10 lui-même, le dispositif de chargement 2 est maintenu de préférence dans la position de repos A non écartée. Une fois que le dispositif d'entreposage 10 est amené dans sa position de travail, c'est-à-dire avec le côté entrée 13 de la bande transporteuse située en dessous du côté sortie 31 de la bande de serrage du dispositif d'arrachage 30, l'élément de chargement 2 est amené à pivoter de la position de repos non représentée vers la position de travail écartée A suivant une rotation de 180° indiquée par la flèche H.

Un conteneur à remplir est placé sur l'élément de chargement dans la position intermédiaire A écartée non tournée.

Quand le dispositif de chargement 2 a pivoté dans la position désirée suivant la flèche identifiée par G sur la figure 1, la bande transporteuse 4, le cas échéant inférieure, coulisse suivant la flèche indiquée par F sur la figure 1. La bande transporteuse, le cas échéant inférieure, est coulissée jusqu'à une distance qui est telle que son côté sortie parvienne au-dessus du conteneur à remplir 20, plus particulièrement à l'intérieur 25 de celui-ci à hauteur de la zone dans le conteneur qui doit être rempli.

Une fois que tous les éléments de l'installation sont à leur place suivant ce qui est décrit ci-dessus, le processus de remplissage du conteneur peut commencer.

Les légumes livrés par le dispositif d'arrachage, en particulier des poireaux, arrivent au côté entrée de la bande transporteuse 3, 4 et sont acheminés vers la sortie 24 de la bande transporteuse, le cas échéant supérieure 3. De là ils tombent sur la bande transporteuse, le cas échéant inférieure 4 qui est en position écartée. Ainsi les légumes arrachés sont transportés plus loin par la bande transporteuse, le cas échéant inférieure, 4 vers l'intérieur du conteneur à remplir 20. Une fois que les légumes ont atteint le côté sortie de la bande transporteuse, le cas échéant inférieure 4 écartée, ils tombent par gravité dans le conteneur à remplir. Ce faisant une première partie de celui-ci est remplie.

Ensuite la bande transporteuse, le cas échéant inférieure, est déplacée un peu plus loin sur une petite distance, de sorte que la partie vide immédiatement proche dans le conteneur est aussi remplie. Ce processus est répété jusqu'à ce qu'une couche de fond entière soit remplie dans le fond du conteneur. Grâce à ce remplissage progressif, d'une part, et à la hauteur de chute des légumes arrachés relativement faible, d'autre part, il est obtenu que les légumes arrachés soient entreposés sans dégâts. Ainsi cette distance de chute a une valeur critique Q dont on attend qu'elle ne soit pas dépassée.

Du fait que le conteneur est tourné vers la bande transporteuse, la hauteur de chute peut être réduite à un minimum. Grâce à ce dispositif, on peut obtenir ce résultat ce faisant. Cela est particulièrement avantageux dans le cas de poireaux qui peuvent être endommagés plus facilement dans des conditions de travail normales étant donné leur nature relativement délicate en comparaison avec d'autres légumes. Les plus grandes prudence et soins sont donc requis pour l'arrachage et l'entreposage des poireaux.

Après le remplissage d'une première couche, le processus de remplissage est répété sur un mode analogue pour le remplissage d'une deuxième couche. De préférence, on opèrera de manière opposée en ce sens que la bande transporteuse, le cas échéant inférieure, est déplacée progressivement de sa position la plus écartée vers la position active la moins écartée. Ceci est à hauteur de l'intérieur 25 du conteneur du côté d'articulation de celui-ci.

Dans un mode alternatif, il est cependant également possible de recommencer le processus de remplissage à nouveau pour chaque couche qui suit de la position active la moins écartée vers la position la plus écartée.

## Revendications

1. Dispositif d'entreposage pour l'entreposage temporaire de légumes arrachés dans un conteneur, en particulier de poireaux, comprenant un châssis mobile (1) pourvu d'un élément de chargement faisant saillie (2) destiné à être chargé avec un conteneur (20), ledit châssis étant pourvu en outre d'au moins une bande transporteuse (3, 4) destinée à l'amenée des légumes arrachés fournis par un dispositif d'arrachage (30) à un côté d'entrée (23) de celle-ci, vers ledit conteneur par son côté sortie (24), dans lequel un élément de réglage (14) est prévu entre ledit élément de chargement et le châssis pour le réglage de l'orientation dudit élément de chargement par rapport au châssis, **caractérisé en ce que** ledit élément de réglage (14) est constitué d'un cylindre qui, à ses deux extrémités, est fixé de façon articulée (28, 29) aux parties respectives du dispositif, en particulier entre les deux rebords (22, resp. 27) de celui-ci.

2. Dispositif suivant la revendication précédente, **caractérisé en ce que** ledit élément de chargement (2) est attaché de façon articulée (13) audit châssis (1), de sorte que ledit élément de chargement peut être amené à pivoter selon (G) à partir d'un état intermédiaire (A) à proximité du sol vers une position tournée qui est telle que le côté sortie (24) de la bande transporteuse précitée parvienne sensiblement jusqu'à l'intérieur (25) dudit conteneur (20).

3. Dispositif suivant l'une des revendications précédentes, **caractérisé en ce que** ledit élément de chargement (2) est formé par une fourche profilée en L dont le côté supérieur (26) est fixé de façon articulée au châssis, dont une partie (21) dudit profil en L s'étend sensiblement parallèlement au sol en position de repos, tandis que l'autre partie (22) dudit profil s'étend sensiblement parallèlement à un rebord (27) du châssis.

4. Dispositif suivant l'une des revendications précédentes, **caractérisé en ce qu'**il est prévu entre ledit châssis et l'élément de chargement un cadre intermédiaire (5), qui est fixé de façon articulée (11, 12) au châssis, d'une part, et sur lequel ledit élément de chargement est fixé d'autre part, ledit élément de chargement étant pivotant (H) autour d'un axe de rotation vertical (X) entre une position de repos et une position de travail (A) écartée.

5. Dispositif suivant la revendication précédente, **caractérisé en ce que** l'angle de rotation maximum est de pratiquement 180°.

6. Dispositif suivant l'une des revendications précédentes, **caractérisé en ce qu'**une bande transporteuse supplémentaire (4) est prévue qui est disposée parallèlement à ladite première bande transporteuse (3) à proximité directe, les deux bandes transporteuses (3, 4) étant mutuellement coulissantes suivant leur direction longitudinale (F).

7. Dispositif suivant la revendication précédente, **caractérisé en ce que** la bande transporteuse coulissante est constituée par une bande inférieure (4) laquelle est coulissante entre une position de repos et une position de travail écartée vers ledit élément de chargement (2), ladite bande inférieure pouvant recevoir des légumes arrachés sur sa surface supérieure (9) à hauteur du côté sortie (24) de ladite bande supérieure (3).

8. Dispositif suivant l'une des revendications précédentes, **caractérisé en ce qu'**au moins une bande transporteuse est fixée de façon articulée (16) au châssis (1) à hauteur dudit côté entrée (23) de la bande transporteuse.

9. Dispositif suivant la revendication précédente, **caractérisé en ce qu'**au côté sortie opposé (24) de ladite bande transporteuse (15) est prévu un élément pivotant pour faire pivoter ladite bande de haut en bas par rapport au châssis.

10. Dispositif suivant la revendication précédente, **caractérisé en ce que** l'élément pivotant précité est constitué d'un cylindre (15) qui est fixé de façon articulée (17) audit côté de sortie (24) de la bande transporteuse.

11. Dispositif suivant l'une des revendications précédentes, **caractérisé en ce que** la bande transporteuse est agencée transversalement par rapport à la direction de déplacement (J) du châssis (1).

12. Dispositif suivant l'une des revendications précédentes, **caractérisé en ce qu'**il est entièrement automatique.

13. Procédé pour l'entreposage de légumes arrachés, en particulier de poireaux, avec un dispositif suivant l'une des revendications 4 à 12, **caractérisé en ce que** ledit élément de transport (2) est amené à pivoter depuis sa position de repos vers la position de travail (A) écartée qu'ensuite le conteneur à remplir (20) est chargé sur ledit élément de charge, qu'ensuite l'élément de charge est amené à pivoter sur un angle déterminé, de préférence l'angle d'écartement maximum (β), qu'ensuite ladite bande transporteuse inférieure (4) est amenée à coulisser depuis sa position de repos (B) vers une première position écartée de travail de sorte que son côté sortie (24) soit amené à hauteur de l'intérieur (25) du conteneur à remplir, et que ledit dispositif d'entreposage (10) est agencé en aval par rapport à un dispositif d'arrachage (30) destiné au transport des légumes arrachés par l'intermédiaire de ladite bande transporteuse (3) jusqu'au sein du conteneur (20).

14. Procédé suivant la revendication précédente, **caractérisé en ce que** le côté sortie de la bande de fond est déplacé en position écartée, d'une part, et ledit élément de charge est tourné, d'autre part, de façon telle que la distance entre le côté sortie de la bande de fond écartée et le niveau de remplissage (P) à l'intérieur du conteneur ne dépasse pas une valeur critique (Q).

15. Procédé suivant la revendication précédente, **caractérisé en ce que** ladite valeur critique (Q) n'est pas dépassée grâce à un réglage adéquat dudit élément de réglage (14).

16. Procédé suivant une des revendications précédentes 13 à 15, **caractérisé en ce que** ledit conteneur est rempli de légumes arrachés couche par couche, dans lequel pour chaque couche ladite bande transporteuse inférieure (4) est décalée chaque fois sur une certaine distance jusqu'à la position la plus écartée pour remplir la partie vide dans le conteneur de ladite couche qui est immédiatement attenante à l'espace qui vient d'être rempli, dans lequel ce processus est poursuivi entre la position vide d'origine du conteneur jusqu'au remplissage complet d'une couche dans lequel le processus est répété pour le remplissage d'une deuxième couche immédiatement attenante, jusqu'à ce que le niveau de remplissage désiré (P) du conteneur soit atteint, le conteneur ainsi rempli étant écarté de l'élément de chargement lorsque le niveau de remplissage désiré est obtenu.

17. Procédé suivant l'une des revendications précédentes 13 à 16, **caractérisé en ce que** ledit dispositif d'entreposage est utilisé avec un dispositif d'arrachage classique.

18. Procédé suivant l'une des revendications 13 à 16, **caractérisé en ce que** ledit dispositif d'entreposage est utilisé avec un dispositif d'arrachage équipé de chenilles.

19. Procédé suivant l'une des revendications précédentes 13 à 16, **caractérisé en ce que** ledit dispositif d'entreposage est utilisé avec un dispositif d'arrachage autotracté.

## Claims

1. Storing device for the temporary storing of lifted vegetables in a container, in particular of leeks, including a mobile frame (1) provided with a protruding loading element (2) intended to be loaded with a container (20), the aforementioned frame being provided moreover with at least one conveying belt (3, 4) intended for the supply of torn off vegetables provided by a pulling up device (30) at an inlet side (23) thereof, to the aforementioned container by its outlet side (24), in which an adjustment element (14) is provided between the aforementioned loading element and the frame for the adjustment of the orientation of the aforesaid loading element with respect to the frame, **characterized in that** the aforementioned adjustment element (14) consists of a cylinder which, at its two ends, is hingedly fixed (28, 29) at the respective parts of the device, in particular between the two edges (22, resp. 27) thereof.

2. Device according to the preceding claim, **characterized in that** the aforementioned loading element (2) is hingedly fixed (13) to said frame (1), so that the aforementioned loading element can be swivelled according to (G) starting from an intermediate state (A) near the ground towards a pivoted position which is such that the outlet (24) of the abovementioned conveying belt virtually reaches the interior (25) of the aforesaid container (20).

3. Device according to one of the preceding claims, **characterized in that** the aforementioned loading element (2) is formed by a fork shaped in L whose topside (26) is hingedly fixed to the frame, wherein a part (21) of the aforesaid profile in L extends virtually parallel to the ground in home position, while the other part (22) of the aforesaid profile extends virtually parallel to an edge (27) of the frame.

4. Device according to one of the preceding claims, **characterized in that** there is provided between the aforementioned frame and the loading element an intermediate frame (5), which is hingedly fixed (11, 12) to the frame, on the one hand, and on which the aforementioned loading element is fixed, on the other hand, wherein the aforementioned loading element is swivelling (H) around a vertical rotation axis (X) between a home position and a remote working position (A).

5. Device according to the preceding claim, **characterized in that** the maximum rotation angle is of practically 180°.

6. Device according to one of the preceding claims, **characterized in that** an additional conveying belt (4) is provided which is arranged in parallel to the aforementioned first conveying belt (3) in direct vicinity, wherein both conveying belts (3, 4) are mutually slidable according to their longitudinal direction (F).

7. Device according to the preceding claim, **characterized in that** the slidable conveying belt consists of a lower belt (4) which is slidable between a home position and a remote working position, towards the aforementioned loading element (2), wherein the aforementioned lower belt is able to receive lifted vegetables on its upper surface (9) at the outlet side (24) of the aforementioned upper belt (3).

8. Device according to one of the preceding claims, **characterized in that** at least one conveying belt is hingedly fixed (16) to the frame (1) at the aforesaid inlet side (23) of said conveying belt.

9. Device according to the preceding claim, **characterized in that** at the opposite outlet side (24) of the aforementioned conveying belt (15), there is provided a swivel to pivot the aforementioned belt up and down respective the frame.

10. Device according to the preceding claim, **characterized in that** the above-mentioned swivel consists of a cylinder (15) which is hingedly fixed (17) to said outlet side (24) of the conveying belt.

11. Device according to one of the preceding claims, **characterized in that** the conveying belt is arranged transversely respective the moving direction (J) of the frame (1).

12. Device according to one of the preceding claims, **characterized in that** it is entirely automatic.

13. Method for the storage of lifted vegetable, in particular leek, with a device according to one of the claims 4 to 12, **characterized in that** the aforementioned transport element (2) is swivelled from its home position towards the remote working position (A), that the container to be filled (20) is subsequently loaded on the aforementioned loading element, that the loading element is then swivelled on a determined angle, preferably the maximum opening angle (β), that the aforementioned lower conveying belt (4) is then slided from its home position (B) towards a first remote working position so that its outer side (24) is moved at the interior (25) of the container to be filled, and that the aforementioned storage device (10) is arranged downstream with respect to a pulling up device (30) intended for the transport of vegetables torn off by means of the aforementioned conveying belt (3) up into the container (20).

14. Method according to the preceding claim, **characterized in that** the outlet side of the lower belt is moved in a remote position, on the one hand, and the aforementioned loading element is pivoted on the other hand, in such a way that the distance between the outlet side of the remote lower belt and the filling level (P) inside the container does not exceed a breaking value (Q).

15. Method according to the preceding claim, **characterized in that** the aforementioned breaking value (Q) is not exceeded thanks to an appropriate adjustment of the aforesaid adjustment element (14).

16. Method according to one of the preceding claims 13 to 15, **characterized in that** the aforementioned container is filled with torn off vegetables layer by layer, wherein for each layer the aforementioned lower conveying belt (4) is shifted each time at a certain distance until the most remote position to fill the empty part in the container of the aforementioned layer which is directly contiguous to the volume which was just filled, wherein this process is continued between the primarily empty position of the container until the complete filling of a layer, wherein the process is repeated for the filling of a second layer which is immediately contiguous, until the desired filling level (P) of the container is reached, wherein the container thus filled is removed from the loading element when the desired filling level is obtained.

17. Method according to one of the preceding claims 13 to 16, **characterized in that** the aforementioned storage device is used with a traditional pulling up device.

18. Method according to one of claims 13 to 16, **characterized in that** the aforementioned storage device is used with a pulling up device equipped with caterpillars.

19. Method according to one of the preceding claims 13 to 16, **characterized in that** the aforementioned storage device is used with a motor tractor pulling up device.

## Patentansprüche

1. Lagerungsvorrichtung für die zeitweilige Lagerung von herausgerissen Gemüse in einem Behälter, insbesondere von Lauchen, der einen beweglichen mit einem hervorspringendem für mit einem Behälter (20) beladen bestimmten Ladungselements (2) ausgestatteten Rahmen (1) umfaßt, wobei besagter Rahmen außerdem mit wenigstens eines Förderbands (3, 4) ausgestattet wird der für die Zuleitung des herausgerissenen Gemüses das durch eine Herausreißvorrichtung (30) einem Eingangsseite (23) derselben geliefert wurde, nach besagten Behälters entlang seine Ausgangsseite (24) bestimmt ist, wobei zwischen besagtem Ladungselement und dem Rahmen ein Einstellungselement (14) für die Einstellung der Orientierung des Ladungselements hinsichtlich dem Rahmen vorgesehen ist, **dadurch gekennzeichnet dass** besagten Einstellungselement (14) durch ein Zylinder gebildet ist, der an seinen zwei Enden an den jeweiligen Teilen der Vorrichtung, insbesondere zwischen deren zwei Rändern (22, resp. 27), gegliedert (28, 29) befestigt wird.

2. Vorrichtung gemäß dem vorhergehende Anspruch, **dadurch gekennzeichnet dass** das vorerwähntes Ladungselement (2) gegliedert (13) an Rahmen solcherart befestigt wird (1), dass sich die besagtes Ladungselement gemäß (G) gedreht werden kann von einem Zwischenstand (A) in der Nähe des Bodens nach einer derart gedrehten Position, daß die Ausgangsseite (24) des oben erwähnten Förderbands merklich bis das Innere (25) des Behälters (20) erreicht.

3. Vorrichtung gemäß eine der vorhergehenden Ansprüche, **dadurch gekennzeichnet daß** besagtes Ladungselement (2) durch eine in L profilierte Gabel gebildet wird, dessen höhere Seite (26) gegliedert befestigt ist an den Rahmen, dessen Teil (21) des besagtes Profils in L sich merklich parallel zum Boden in Ruheposition erstreckt, während der andere Teil (22) des Profils sich merklich parallel zu einem Rand (27) des Rahmens erstreckt.

4. Vorrichtung gemäß eine der vorhergehenden Ansprüche, **dadurch gekennzeichnet daß** zwischen besagtem Rahmen und dem Ladungselement ein Zwischenrahmen (5) vorgesehen ist, der gegliedert (11,12) am Rahmen befestigt ist einerseits, und auf dem besagtes Ladungselement befestigt wird anderseits, wobei besagtes Ladungselement um eine vertikale Drehachse (X) zwischen einer Ruheposition und einer gespreitzten Arbeitsposition (A) drehbar (H) ist.

5. Vorrichtung gemäß dem vorhergehende Anspruch, **dadurch gekennzeichnet dass** der maximale Drehwinkel von praktisch 180° ist.

6. Vorrichtung gemäß eine der vorhergehenden Ansprüche, **dadurch gekennzeichnet daß** ein zusätzliches Förderband (4) vorgesehen wird, das parallel zu besagt erstem Förderband (3) in direkter Nähe verfügt wird, wobei beide Förderbänder (3, 4) gegeneinander schiebbar sind gemäß ihrer Längsrichtung (F).

7. Vorrichtung gemäß dem vorhergehende Anspruch, **dadurch gekennzeichnet dass** das schiebbare Förderband durch ein niedrigereres Band (4) gebildet wird das zwischen einer Ruheposition und einer in Richtung besagten Ladungselements (2) entlegenen Arbeitsposition schiebbar ist, wobei besagtes niedrigereres Band herausgerissen Gemüse auf seiner höheren Oberfläche (9) an der Ausgangsseite (24) des höheren Bands (3) erhalten kann.

8. Vorrichtung gemäß eine der vorhergehenden Ansprüche, **dadurch gekennzeichnet daß** wenigstens ein Förderband an den Rahmen (1) am Eingangsseite (23) des Förderbands gegliedert (16) festgelegt wird.

9. Vorrichtung gemäß dem vorhergehende Anspruch, **dadurch gekennzeichnet dass** an der entgegengesetzte Ausgangsseite (24) des Förderbands (15) ein Drehelement vorgesehen wird, um besagtes Band hinsichtlich des Rahmens auf und ab zu drehen.

10. Vorrichtung gemäß dem vorhergehende Anspruch, **dadurch gekennzeichnet dass** das oben erwähnte Drehelement aus einem Zylinder (15) besteht der an der Ausgangsseite (24) des Förderbands gegliedert (17) festgelegt wird.

11. Vorrichtung gemäß eine der vorhergehenden Ansprüche, **dadurch gekennzeichnet daß** das Förderband quer hinsichtlich der Verstellungsrichting (J) des Rahmens (1) angeordnet ist.

12. Vorrichtung gemäß eine der vorhergehenden Ansprüche, **dadurch gekennzeichnet daß** sie völlig automatisch ist.

13. Verfahren für die Lagerung von herausgerissen Gemüse, insbesondere von Lauchen, mit einer Vorrichtung gemaß eine der Ansprüche 4 bis 12, **dadurch gekennzeichnet daß** besagtes Transportelement (2) von seiner Ruheposition nach der entlegenen Arbeitsposition (A) gedreht wird, daß danach der zu füllende Behälter (20) auf besagtem Ladungselement gefüllt wird, daß danach das Ladungselement um einen bestimmten Winkel, vorzugsweise der maximale Spreitzwinkel (β), gedreht wird, daß danach besagtes niedrigereres Förderband (4) von seiner Ruheposition (B) nach einer ersten gespreitzten Arbeitsposition derart geschiebt wird daß ihre Ausgangsseite (24) an das Inneren (25) des zu füllen Behälters verstellt wird, und daß besagte Lagerungsvorrichtung (10) flußabwärts hinsichtlich einer für den Transport des mittels besagtes Förderband (3) bis zum Inneren des Behälters (20) herausgerissen Gemüses bestimmte Herausreißvorrichtung (30) angeordnet wird.

14. Verfahren gemäß dem vorhergehende Anspruch, **dadurch gekennzeichnet dass** die Ausgangsseite des niedrigereres Bands in gespreitzter Position verschoben wird einerseits, und besagtem Ladungselement derart gedreht wird anderseits, daß die Distanz zwischen der Ausgangsseite des gespreitzter niedrigereres Bands und dem Füllpegel (P) im Inneren des Behälters einen kritischen Wert (Q) nicht überschreitet.

15. Verfahren gemäß dem vorhergehende Anspruch, **dadurch gekennzeichnet dass** besagter kritischer Wert (Q) dank einer adäquaten Einstellung des Einstellungselements (14) nicht überschritten wird.

16. Verfahren gemäß eine der vorhergehenden Ansprüche 13 bis 15, **dadurch gekennzeichnet dass** besagter Behälter mit herausgerissen Gemüse mit jeweiligen Schicht gefüllt wird, in dem für jede Schicht besagte niedrigereres Förderband (4) jedesmal auf einer gewissen Distanz bis zur entlegensten Position verschoben wird, um den im Behälter leeren Anteil der Schicht zu füllen, die am soeben gefüllten Raum unmittelbar angrenzend ist, wobei dieser Vorgang zwischen der anfänglich leeren Position des Behälters bis zum vollständigen Füllen einer Schicht verfolgt, wobei der Vorgang wiederholt wird für das Füllen einer zweiten unmittelbar angrenzenden Schicht, bis das gewünschte Füllpegel (P) des Behälters erreicht wird, wobei der so gefüllte Behälter von das Ladungselement entfernt wird, wenn das gewünschte Füllpegel erhalten wird.

17. Verfahren gemäß eine der vorhergehenden Ansprüche 13 bis 16, **dadurch gekennzeichnet dass** besagte Lagerungsvorrichtung mit einer klassischen Herausreißvorrichtung benutzt wird.

18. Verfahren gemäß eine der vorhergehenden Ansprüche 13 bis 16, **dadurch gekennzeichnet dass** besagte Lagerungsvorrichtung mit einer mit Raupen ausgestattete Herausreißvorrichtung benutzt wird.

19. Verfahren gemäß eine der vorhergehenden Ansprüche 13 bis 16, **dadurch gekennzeichnet dass** besagte Lagerungsvorrichtung mit einer selbsttätige Herausreißvorrichtung benutzt wird.
